# EUROPÄISCHE PATENTANMELDUNG

(11) **EP 2 586 807 A1**
(43) Veröffentlichungstag der Anmeldung: **01.05.2013**
(21) Anmeldenummer: 12189596.5
(22) Anmeldetag: 23.10.2012
(51) Int. Cl.: C08G 18/44, C08G 18/66, C08K 3/36, C08G 18/40

(54) **Thermoplastische Polyurethane und deren Verwendung**

(30) Priorität: 25.10.2011 DE 102011085182
(71) Anmelder: Bayer Intellectual Property GmbH, 40789 Monheim (DE)
(72) Erfinder: Wamprecht, Christian, 41472 Neuss (DE); Shafiq, Faisal, 47807 Krefeld-Fischeln (DE)
(74) Vertreter: BIP Patents

(57) **Zusammenfassung**

Die vorliegende Erfindung betrifft thermoplastische Polyurethanformmassen mit verbesserter Oberflächenbeständigkeit (Schreib- und Kratzbeständigkeit) und sehr guter technischer Verarbeitbarkeit sowie deren Verwendung.

## Beschreibung

Die vorliegende Erfindung betrifft thermoplastische Polyurethanformmassen mit sehr hoher Oberflächenbeständigkeit (Schreib-, Kratz- und Abriebbeständigkeit), sehr guter Witterungs-, UV-und Hydrolysebeständigkeit, sehr geringem Ausblühverhalten, sehr guter technischer Verarbeitbarkeit bei großem Verarbeitungsfenster sowie deren Verwendung, insbesondere zur Herstellung von großflächigen Spritzgussteilen für Außenanwendungen.

Thermoplastische Polyurethane (TPU) sind wegen ihrer guten Elastomereigenschaften und thermoplastischen Verarbeitbarkeit von großer technischer Bedeutung. Eine Übersicht über die Herstellung, Eigenschaften und Anwendungen von TPU ist z.B. im Kunststoff Handbuch [G. Becker, D. Braun], Band 7 "Polyurethane", München, Wien, Carl Hanser Verlag, 1983 gegeben.

TPU werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Der Aufbau der thermoplastisch verarbeitbaren Polyurethanelastomere kann entweder schrittweise (Prepolymerdosierverfahren) oder durch die gleichzeitige Reaktion aller Komponenten in einer Stufe (one-shot-Dosierverfahren) erfolgen.

In DE-A 102 30 020 wird die Verwendung von Polyorganosiloxanen zur Verbesserung der Rubbel- und Kratzbeständigkeit (mechanische Oberflächenbeständigkeit) für TPU beschrieben. Bei der Verarbeitung der TPU, die diese Additive enthalten, treten allerdings nach einiger Zeit (nach einigen Schüssen) im Spritzgießverfahren Oberflächenstörungen auf, welche zu unerwünschten erhöhten Ausschussraten führen.

In EP-A 2 083 026 wird die Verwendung spezieller Mischungen von niedermolekularen und hochmolekularen Polyorganosiloxanen zur Verbesserung der Rubbel- und Kratzbeständigkeit (mechanische Oberflächenbeständigkeit) für TPU beschrieben. Bei der Verarbeitung der TPU, die diese Additivmischungen enthalten, treten allerdings bei niedrigen Verarbeitungstemperaturen (< 180 °C) im Spritzgießverfahren gelegentlich Oberflächenstörungen und Delaminierung auf, welche zu unerwünschten erhöhten Ausschussraten führen.

Aufgabe der vorliegenden Erfindung war es daher, thermoplastische Polyurethane (TPU) zur Verfügung zu stellen, die eine sehr gute mechanische Oberflächenbeständigkeit haben und gleichzeitig eine besonders hohe Witterungs-, UV-und Hydrolysebeständigkeit besitzen sowie hervorragende technische Verarbeitbarkeit, insbesondere ein breites Verarbeitungsfenster bezüglich der Verarbeitungstemperatur, sowie keine Oberflächenstörungen, insbesondere Delaminierung, bei der Verarbeitung aufweisen.

Diese Aufgabe konnte durch Zusammensetzungen auf Basis von speziellen TPU enthaltend eine spezielle Additivmischung gelöst werden.

Gegenstand der vorliegenden Erfindung ist daher eine Zusammensetzung enthaltend thermoplastische Polyurethane, die erhältlich sind aus
a) einer Isocyanatkomponente, im Wesentlichen bestehend aus
   a1) 50 bis 100 Mol-% 1,6-Hexamethylendiisocyanat und
   a2) 0 bis 50 Mol-% eines aliphatischen Diisocyanats, das von 1,6-Hexamethylendiisocyanat verschieden ist, oder einer Mischung solcher aliphatischen Diisocyanate und/oder cycloaliphatischen Diisocyanate.
b) einer niedermolekularen Polyolkomponente, im Wesentlichen bestehend aus
   b1) 30 bis 100 Mol-% wenigstens eines difunktionellen Kettenverlängerers mit einem zahlenmittleren Molekulargewicht M̅ₙ von 76 bis 286 g/mol und
   b2) 0 bis 70 Mol-% eines oder mehrerer Kettenverlängerer mit einem zahlenmittleren Molekulargewicht M̅ₙ von 104 bis 500 g/mol und mit der allgemeinen Formel (I) oder (II) 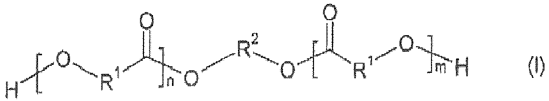 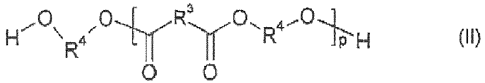
   mit
   R1: verzweigte oder unverzweigte Alkylenreste mit 1 bis 12 C-Atomen oder substituierte oder nicht-substituierte Alkarylenreste mit 6 bis 24 C-Atomen,
   R2, R4: verzweigte oder unverzweigte Alkylenreste oder Alkoxyalkylreste mit 1 bis 12 C-Atomen oder substituierte oder nicht-substituierte Alkarylenreste
   oder substituierte oder nicht substituierte Alkoxyarylenreste mit 6 bis 24 C-Atomen,
   R3: verzweigte oder unverzweigte Alkylenreste mit 1 bis 8 C-Atomen oder substituierte oder nicht-substituierte Alkarylenreste mit 6 bis 20 C-Atomen, substituierte oder nicht-substituierte Arylenreste mit 6 bis 20 C-Atomen, substituierte oder nicht-substituierte Aralkylenreste mit 6 bis 20 C-Atomen, n, m = unabhängig voneinander eine ganze Zahl von 0 bis 10 und n+m ≥ 1 und p = 1 bis 10 ist,
   oder deren Gemische,
c) einer Polyolkomponente, im Wesentlichen bestehend aus
   c1) 50 bis 100 Mol-% wenigstens eines Polycarbonatdiols mit einem zahlenmittleren Molekulargewicht M̅ₙ von 500 bis 3000 g/mol und
   c2) 0 bis 50 Mol-% eines anderen, von Polycarbonatdiolen verschiedenen polymeren Diols mit einem zahlenmittleren Molekulargewicht M̅ₙ von 450 bis 6000 g/mol,
      wobei das Verhältnis der Anzahl der Isocyanatgruppen in Komponente a) zu der Anzahl der gegenüber Isocyanat reaktiven Gruppen in Komponenten b), c) und gegebenenfalls g) 0,9:1 bis 1,1:1 beträgt,
      unter Zugabe von
e) gegebenenfalls Katalysatoren,
f) gegebenenfalls Zusatzmitteln und/oder Hilfsstoffen,
g) gegebenenfalls monofunktionellen Kettenabbrechern,
und welche weiterhin enthält
d) 0,4 bis 10 Gew.-%, bezogen auf das Gesamtgewicht der Zusammensetzung, eines Gemisches aus
d1) 0,1 bis 4 Gew.-%, bezogen auf das Gesamtgewicht der Zusammensetzung, mindestens eines amorphen und/oder kristallinen Siliciumdioxids,
und speziellen Polyorganosiloxangemischen der allgemeinen Formel (R₂SiO)ₙ, wobei R einen organischen Kohlenwasserstoffrest darstellt, der sowohl linear als auch verzweigt aufgebaut sein kann, und 1 bis 27 Kohlenstoffatome aufweist, und n eine ganze Zahl von 3 bis 8000 ist, wobei das Polyorganosiloxangemisch aus
d2) 0 bis 2 Gew.-%, bezogen auf das Gesamtgewicht der Zusammensetzung, eines oder mehrerer Polyorganosiloxane (R₂SiO)ₙ mit n = 3 bis 300 und
d3) 0,2 bis 8 Gew.-%, bezogen auf das Gesamtgewicht der Zusammensetzung, eines oder mehrerer Polyorganosiloxane (R₂SiO)ₙ mit n = 1000 bis 8000 besteht

Bevorzugte Ausführungsformen sind solche Zusammensetzungen enthaltend thermoplastisches Polyurethan, welches erhältlich ist aus
a) einer Isocyanatkomponente, im Wesentlichen bestehend aus
   a1) 65 bis 100 Mol-% 1,6-Hexamethylendiisocyanat und
   a2) 0 bis 35 Mol-% eines aliphatischen Diisocyanats, das von 1,6-Hexamethylendiisocyanat verschieden ist, oder einer Mischung solcher aliphatischen Diisocyanate und/oder cycloaliphatischen Diisocyanate.
b) einer niedermolekularen Polyolkomponente, im Wesentlichen bestehend aus
   b1) 35 bis 100 Mol-% wenigstens eines difunktionellen Kettenverlängerers mit einem zahlenmittleren Molekulargewicht M̅ₙ von 90 bis 286 g/mol und
   b2) 0 bis 65 Mol-% eines oder mehrerer Kettenverlängerer mit einem zahlenmittleren Molekulargewicht n von 104 bis 500 g/mol und mit der allgemeinen Formel (I) oder (II) 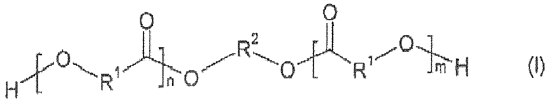 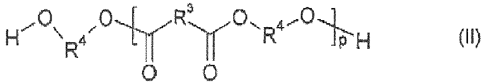 mit
   R1: verzweigte oder unverzweigte Alkylenreste mit 1 bis 12 C-Atomen oder substituierte oder nicht-substituierte Alkarylenreste mit 6 bis 24 C-Atomen,
   R2, R4: verzweigte oder unverzweigte Alkylenreste oder Alkoxyalkylreste mit 1 bis 12 C-Atomen oder substituierte oder nicht-substituierte Alkarylenreste oder substituierte oder nicht substituierte Alkoxyarylenreste mit 6 bis 24 C-Atomen,
   R3: verzweigte oder unverzweigte Alkylenreste mit 1 bis 8 C-Atomen oder substituierte oder nicht-substituierte Alkarylenreste mit 6 bis 20 C-Atomen, substituierte oder nicht-substituierte Arylenreste mit 6 bis 20 C-Atomen, substituierte oder nicht-substituierte Aralkylenreste mit 6 bis 20 C-Atomen,
   n, m = unabhängig voneinander eine ganze Zahl von 0 bis 10 und
   n+m ≥ 1 und p = 1 bis 10 ist,
   oder deren Gemische,
c) einer Polyolkomponente, im Wesentlichen bestehend aus
   c1) 65 bis 100 Mol-% wenigstens eines Polycarbonatdiols mit einem zahlenmittleren Molekulargewicht M̅ₙ von 500 bis 3000 g/mol und
   c2) 0 bis 35 Mol-% eines Polyetherdiols und/oder Polyesterdiols mit einem
   zahlenmittleren Molekulargewicht M̅ₙ von 450 bis 4000 g/mol,
e) gegebenenfalls Katalysatoren,
f) gegebenenfalls Zusatzmitteln und/oder Hilfsstoffen,
g) gegebenenfalls monofunktionellen Kettenabbrechern, und welche weiterhin enthalten
d) 0,4 bis 10 Gew.-%, bezogen auf das Gesamtgewicht der Zusammensetzung, eines Gemisches aus
   d1) 0,1 bis 4 Gew.-%, bezogen auf das Gesamtgewicht der Zusammensetzung, mindestens eines amorphen und/oder kristallinen Siliciumdioxids,
   und speziellen Polyorganosiloxangemischen der allgemeinen Formel(R₂SiO)ₙ, wobei R einen organischen Kohlenwasserstoffrest darstellt, der sowohl linear als auch verzweigt aufgebaut sein kann, und 1 bis 27 Kohlenstoffatome aufweist, und n eine ganze Zahl von 3 bis 8000 ist, wobei das Polyorganosiloxangemisch aus
   d2) 0 bis 2 Gew.-%, bezogen auf das Gesamtgewicht der Zusammensetzung, eines oder mehrerer Polyorganosiloxane (R₂SiO)ₙ mit n = 3 bis 300 und
   d3) 0,2 bis 8 Gew.-%, bezogen auf das Gesamtgewicht der Zusammensetzung, eines oder mehrerer Polyorganosiloxane (R₂SiO)ₙ mit n = 1000 bis 8000 besteht

Weiterhin bevorzugte Ausführungsformen sind solche Zusammensetzungen enthaltend thermoplastisches Polyurethan, welches erhältlich ist aus
a) einer Isocyanatkomponente, im Wesentlichen bestehend aus
   a1) 70 bis 100 Mol-% 1,6-Hexamethylendiisocyanat und
   a2) 0 bis 30 Mol-% eines aliphatischen Diisocyanats, das von 1,6-Hexamethylendiisocyanat verschieden ist, oder einer Mischung solcher aliphatischen Diisocyanate und/oder cycloaliphatischen Diisocyanate.
b) einer niedermolekularen Polyolkomponente, im Wesentlichen bestehend aus
   b1) 35 bis 95 Mol-% wenigstens eines difunktionellen Kettenverlängerers mit
   einem zahlenmittleren Molekulargewicht M̅ₙ von 118 bis 286 g/mol und
   b2) 5 bis 65 Mol-% eines oder mehrerer Kettenverlängerer mit einem
   zahlenmittleren Molekulargewicht n von 104 bis 500 g/mol und mit der allgemeinen Formel (I) oder (II) 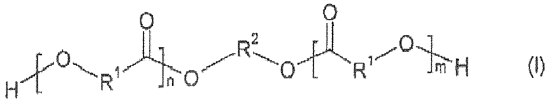 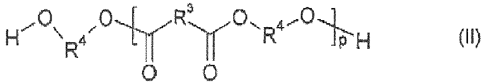 mit
   R1: verzweigte oder unverzweigte Alkylenreste mit 1 bis 12 C-Atomen oder substituierte oder nicht-substituierte Alkarylenreste mit 6 bis 24 C-Atomen,
   R2, R4: verzweigte oder unverzweigte Alkylenreste oder Alkoxyalkylreste mit 1 bis 12 C-Atomen oder substituierte oder nicht-substituierte Alkarylenreste oder substituierte oder nicht substituierte Alkoxyarylenreste mit 6 bis 24 C-Atomen,
   R3: verzweigte oder unverzweigte Alkylenreste mit 1 bis 8 C-Atomen oder substituierte oder nicht-substituierte Alkarylenreste mit 6 bis 20 C-Atomen, substituierte oder nicht-substituierte Arylenreste mit 6 bis 20 C-Atomen, substituierte oder nicht-substituierte Aralkylenreste mit 6 bis 20 C-Atomen,
   n, m = unabhängig voneinander eine ganze Zahl von 0 bis 10 und
   n+m ≥ 1 und p = 1 bis 10 ist,
   oder deren Gemische,
c) einer Polyolkomponente, im Wesentlichen bestehend aus
   c1) 70 bis 100 Mol-% wenigstens eines Polycarbonatdiols mit einem zahlenmittleren Molekulargewicht M̅ₙ von 500 bis 2500 g/mol und
   c2) 0 bis 30 Mol-% eines Polyetherdiols und/oder Polyesterdiols mit einem zahlenmittleren Molekulargewicht M̅ₙ von 450 bis 4000 g/mol,
   wobei das Verhältnis der Anzahl der Isocyanatgruppen in Komponente a) zu der Anzahl der gegenüber Isocyanat reaktiven Gruppen in Komponenten b), c) und gegebenenfalls g) 0,9:1 bis 1,1:1 beträgt,
   unter Zugabe von
e) gegebenenfalls Katalysatoren,
f) gegebenenfalls Zusatzmitteln und/oder Hilfsstoffen,
g) gegebenenfalls monofunktionellen Kettenabbrechern,
   und welche weiterhin enthalten
d) 0,4 bis 10 Gew.-%, bezogen auf das Gesamtgewicht der Zusammensetzung, eines Gemisches aus
   d1) 0,1 bis 4 Gew.-%, bezogen auf das Gesamtgewicht der Zusammensetzung,
      mindestens eines amorphen und/oder kristallinen Siliciumdioxids,
      und speziellen Polyorganosiloxangemischen der allgemeinen Formel(R₂SiO)ₙ, wobei R einen organischen Kohlenwasserstoffrest darstellt, der sowohl linear als auch verzweigt aufgebaut sein kann, und 1 bis 27 Kohlenstoffatome aufweist, und n eine ganze Zahl von 3 bis 8000 ist, wobei das Polyorganosiloxangemisch aus
   d2) 0 bis 2 Gew.-%, bezogen auf das Gesamtgewicht der Zusammensetzung,
      eines oder mehrerer Polyorganosiloxane (R₂SiO)ₙ mit n = 3 bis 300 und
   d3) 0,2 bis 8 Gew.-%, bezogen auf das Gesamtgewicht der Zusammensetzung,
      eines oder mehrerer Polyorganosiloxane (R₂SiO)ₙ mit n = 1000 bis 8000 besteht.

Weiterhin bevorzugte Ausführungsformen sind solche Zusammensetzungen enthaltend thermoplastisches Polyurethan, welches erhältlich ist aus
a) einer Isocyanatkomponente, im Wesentlichen bestehend aus 1,6- Hexamethylendiisocyanat
b) einer niedermolekularen Polyolkomponente, im Wesentlichen bestehend aus
   b1) 40 bis 90 Mol-% wenigstens eines difunktionellen Kettenverlängerers mit einem zahlenmittleren Molekulargewicht M̅ₙ von 118 bis 286 g/mol und
   b2) 10 bis 60 Mol-% eines oder mehrerer Kettenverlängerer mit einem
      zahlenmittleren Molekulargewicht n von 104 bis 500 g/mol und mit der allgemeinen Formel (I) oder (II) 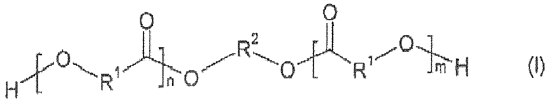 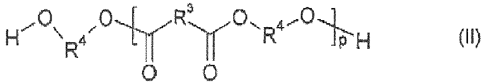 mit
      R1: verzweigte oder unverzweigte Alkylenreste mit 1 bis 12 C-Atomen oder substituierte oder nicht-substituierte Alkarylenreste mit 6 bis 24 C-Atomen,
      R2, R4: verzweigte oder unverzweigte Alkylenreste oder Alkoxyalkylreste mit 1 bis 12 C-Atomen oder substituierte oder nicht-substituierte Alkarylenreste oder substituierte oder nicht substituierte Alkoxyarylenreste mit 6 bis 24 C-Atomen,
      R3: verzweigte oder unverzweigte Alkylenreste mit 1 bis 8 C-Atomen oder substituierte oder nicht-substituierte Alkarylenreste mit 6 bis 20 C-Atomen, substituierte oder nicht-substituierte Arylenreste mit 6 bis 20 C-Atomen, substituierte oder nicht-substituierte Aralkylenreste mit 6 bis 20 C-Atomen, n, m = unabhängig voneinander eine ganze Zahl von 0 bis 10 und n+m ≥ 1 und p = 1 bis 10 ist,
      oder deren Gemische,
c) einer Polyolkomponente, im Wesentlichen bestehend aus wenigstens einem Polycarbonatdiol mit einem zahlenmittleren Molekulargewicht M̅ₙ von 500 bis 2500 g/mol
   wobei das Verhältnis der Anzahl der Isocyanatgruppen in Komponente a) zu der Anzahl der gegenüber Isocyanat reaktiven Gruppen in Komponenten b), c) und gegebenenfalls g) 0,9:1 bis 1,1:1 beträgt,
   unter Zugabe von
e) gegebenenfalls Katalysatoren,
f) gegebenenfalls Zusatzmitteln und/oder Hilfsstoffen,
g) gegebenenfalls monofunktionellen Kettenabbrechern, und welche enthalten
d) 0,4 bis 10 Gew.-%, bezogen auf das Gesamtgewicht der Zusammensetzung, eines Gemisches aus
   d1) 0,1 bis 4 Gew.-%, bezogen auf das Gesamtgewicht der Zusammensetzung, mindestens eines amorphen und/oder kristallinen Siliciumdioxids,
      und speziellen Polyorganosiloxangemischen der allgemeinen Formel(R₂SiO)ₙ, wobei R einen organischen Kohlenwasserstoffrest darstellt, der sowohl linear als auch verzweigt aufgebaut sein kann, und 1 bis 27 Kohlenstoffatome aufweist, und n eine ganze Zahl von 3 bis 8000 ist, wobei das Polyorganosiloxangemisch aus
   d2) 0 bis 2 Gew.-%, bezogen auf das Gesamtgewicht der Zusammensetzung, eines oder mehrerer Polyorganosiloxane (R₂SiO)ₙ mit n = 3 bis 300 und
   d3) 0,2 bis 8 Gew.-%, bezogen auf das Gesamtgewicht der Zusammensetzung, eines oder mehrerer Polyorganosiloxane (R₂SiO)ₙ mit n = 1000 bis 8000 besteht.

Im Rahmen dieser Anmeldung bedeutet "im Wesentlichen bestehend aus" zu einem überwiegenden Anteil (mehr als 50%) bestehend aus, bevorzugt zu mehr als 80% bestehend aus, besonders bevorzugt zu mehr als 90% bestehend aus, ebenfalls besonders bevorzugt zu mehr als 95% bestehend aus, und ganz besonders bevorzugt zu 99 -100% bestehend aus bzw. vollständig bestehend aus.

Als organische Diisocyanate (a) können aliphatische, araliphatische und cycloaliphatische, Diisocyanate oder beliebige Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im Einzelnen seien beispielhaft genannt: aliphatische Diisocyanate wie Ethylendiisocyanat, 1,4-Tetramethylendiisocyanat, 1,6-Hexamethylendiisocyanat, 1,12-Dodecandiisocyanat; cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische; araliphatische Diisocyanate, wie m- und p-Xylylendiisocyanat oder m- und p-Tetramethylxylylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens soviel Polyisocyanat zugesetzt werden, dass ein noch thermoplastisch verarbeitbares Produkt entsteht. Polyisocyanate sind Produkte mit einer Isocyanatfunktionalität von ≥ 2, wie z. B. Modifizierungen der genannten Diisocyanate, beispielsweise Dimerisate, Trimerisate, Allophanate, Biurete und Urethane.

Die Kettenverlängerungsmittel b) besitzen im Mittel vorzugsweise 1,8 bis 3,0 zerewitinoffaktive Wasserstoffatome und haben ein Molekulargewicht von 60 bis 450. Hierunter versteht man vorzugsweise solche mit zwei bis drei, besonders bevorzugt mit zwei Hydroxylgruppen.

Als Kettenverlängerer b) werden bevorzugt eine oder mehrere Verbindungen eingesetzt aus der Gruppe der aliphatischen Diole mit 2 bis 14 Kohlenstoffatomen, wie z.B. Ethandiol, 1,2-Propandiol, 1,3-Propandiol, 1,4-Butandiol, 2,3-Butandiol, 1,5-Pentandiol, 1,6-Hexandiol, 1,10-Decandiol, 1,12-Dodecandiol, Diethylenglykol, Dipropylenglykol, 1,4-Cyclohexandiol, 1,4-Dimethanolcyclohexan und Neopentylglykol. Geeignet sind jedoch auch Diester der Terephthalsäure mit Glykolen mit 2 bis 4 Kohlenstoffatomen, z.B. Terephthalsäure-bisethylenglykol oder Terephthalsäure-bis-1,4-butandiol, Hydroxyalkylenether des Hydrochinons, z.B. 1,4-Bis(β-hydroxyethyl)-hydrochinon, ethoxylierte Bisphenole, z.B. 1,4-Bis(β-hydroxyethyl)-bisphenol A. Die genannten Diole können auch mit unterschiedlichen molaren Mengen an ε-Caprolacton unter Ringöffnungsreaktion umgesetzt werden, so dass entsprechende Kettenverlängerer mit höherem Molekulargewicht entstehen. Besonders bevorzugt werden als Kettenverlängerer 1,4-Butandiol, 1,6-Hexandiol, 1,4-Dimethanolcyclohexan, 1,4-Di(β-hydroxyethyl)-hydrochinon oder 1,4-Di(β-hydroxyethyl)-bisphenol A und deren Umsetzungsprodukte mit ε-Caprolacton verwendet. Ganz besonders bevorzugt ist eine Kettenverlängererkombination aus 1,4-Di(β-hydroxyethyl)-hydrochinon und einem Umsetzungsprodukt aus Hexandiol und ε-Caprolacton. Daneben können auch kleinere Mengen an Triolen, wie z. B. Trimethylolpropan, Glycerin oder deren Umsetzungsprodukte mit ε-Caprolacton sowie Mischungen dieser trifunktionellen Alkohole zugesetzt werden.

Besonders bevorzugte Kettenverlängerer b) sind Mischungen enthaltend
b1) wenigstens einen difunktionellen Kettenverlängerer mit einem zahlenmittleren Molekulargewicht M̅ₙ von 118 bis 286 g/mol und
b2) einen oder mehrere Kettenverlängerer mit einem zahlenmittleren Molekulargewicht M̅ₙ von 104 bis 500 g/mol mit den allgemeinen Formeln: 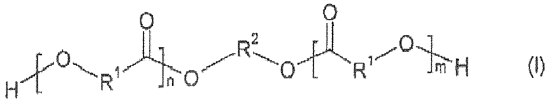 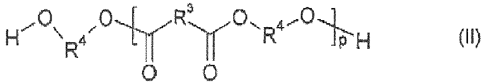 mit
   R1: verzweigte oder unverzweigte Alkylenreste mit 1 bis 12 C-Atomen oder substituierte oder nicht-substituierte Alkarylenreste mit 6 bis 24 C-Atomen,
   R2, R4: verzweigte oder unverzweigte Alkylenreste oder Alkoxyalkylreste mit 1 bis 12 C-Atomen oder substituierte oder nicht-substituierte Alkarylenreste oder substituierte oder nicht substituierte Alkoxyarylenreste mit 6 bis 24 C-Atomen,
   R3: verzweigte oder unverzweigte Alkylenreste mit 1 bis 8 C-Atomen oder substituierte oder nicht-substituierte Alkarylenreste mit 6 bis 20 C-Atomen, substituierte oder nicht-substituierte Arylenreste mit 6 bis 20 C-Atomen, substituierte oder nicht-substituierte Aralkylenreste mit 6 bis 20 C-Atomen,
   n, m = unabhängig voneinander eine ganze Zahl von 0 bis 10 und
   n+m ≥ 1 und p = 1 bis 10 ist.

Beispiele für Kettenverlängerer b2) und ihre Herstellung sind beispielsweise in der EP 1 854 818 A1 beschrieben.

Als Polyolkomponente c) werden solche mit im Mittel mindestens 1,8 bis höchstens 3,0 Zerewitinoff-aktiven Wasserstoffatomen und einem zahlenmittleren Molekulargewicht M̅ₙ von 500 bis 10000 eingesetzt, wobei das Molekulargewicht M̅ₙ entweder rechnerisch über die OH-Zahl ermittelt wird, falls es sich um difunktionelle Polymere handelt, oder aber mittels Gelpermeationsgromatographie (GPC) bestimmt wird. Produktionsbedingt enthalten die Polyole oft kleine Mengen an nicht-linearen Verbindungen. Häufig spricht man daher auch von "im Wesentlichen linearen Polyolen". Bevorzugt sind Polyester-, Polyether-, Polycarbonatdiole oder Gemische aus diesen, besonders bevorzugt sind Polycarbonatdiole im Gemisch mit Polyether- und/oder Polyesterdiolen, ganz besonders bevorzugt werden Polycarbonatdiole oder Gemische verschiedener Polycarbonatdiole als alleinige Polyolkomponente c) eingesetzt.

Insbesondere zwei bis drei, vorzugsweise zwei Hydroxylgruppen aufweisende Verbindungen sind bevorzugt, speziell solche mit zahlenmittleren Molekulargewichten M̅ₙ von 450 bis 6000, bevorzugt solche mit zahlenmittleren Molekulargewichten M̅ₙ von 600 bis 4500; besonders bevorzugt solche mit zahlenmittleren Molekulargewichten M̅ₙ von 800 bis 3000. Hydroxylgruppen aufweisende Polyester, Polyether und Polycarbonate sind bevorzugt. Besonders bevorzugt sind Gemische aus Hydroxylgruppen aufweisenden Polyethern und Polycarbonaten. Ganz besonders bevorzugt als Polyolkomponente c) sind Hydroxylgruppen aufweisende Polycarbonate.

Geeignete Polycarbonatdiole können dadurch hergestellt werden, dass Glykole mit 2 bis 12, vorzugsweise 2 bis 6 Kohlenstoffatomen, z.B. Ethylenglykol, Diethylenglykol, 1,3-Propandiol, 1,4-Butandiol, 1,5-Pentandiol, 1,6-Hexandiol, 3-Methyl-1,5-pentandiol, 1,4-Dimethanolcyclohexan, 1,10-Decandiol, 1,12-Dodecandiol, 2,2-Dimethyl-1,3-propandiol, oder Dipropylenglykol oder deren Umsetzungsprodukte mit ε-Caprolacton, mit Dimethylcarbonat oder Diphenylcarbonat unter Abspaltung von Methanol oder Phenol umgesetzt werden. Besonders geeignete Polycarbonatdiole haben ein Molekulargewicht M̅ₙ von 500 bis 3000 g/mol und basieren auf 1,4-Butandiol, 1,6-Hexandiol, 3-Methyl-1,5-pentandiol oder deren Mischungen sowie deren Umsetzungsprodukte mit ε-Caprolacton. Ganz besonders geeignete Polycarbonatdiole haben ein Molekulargewicht M̅ₙ von 1000 bis 2500 g/mol und basieren auf 1,4-Butandiol, 1,6-Hexandiol oder deren Mischungen sowie deren Umsetzungsprodukte mit ε-Caprolacton. Der Anteil von Polycarbonatdiolen in der Polyolkomponente c) beträgt mindestens 50 Mol-%, vorzugsweise mindestens 70 Mol-%, besonders bevorzugt mindestens 85 Mol-% und ganz besonders bevorzugt 100 Mol-%.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherpolyole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in einer solchen Menge, dass ein noch thermoplastisch verarbeitbares Produkt entsteht. Die im Wesentlichen linearen Polyether-Diole besitzen vorzugsweise zahlenmittlere Molekulargewichte M̅ₙ von 500 bis 6000 g/mol. Sie können sowohl einzeln als auch in Form von Mischungen untereinander zur Anwendung kommen. Ganz besonders geeignete Polyether-Diole haben ein Molekulargewicht M̅ₙ von 1000 bis 4000 g/mol. Der Anteil von Polyether-Diolen in der Polyolkomponente c) beträgt < 50 Mol-%, vorzugsweise < 30 Mol-%, besonders bevorzugt ≤15 Mol-% und ganz besonders bevorzugt 0 Mol-%.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure oder deren möglichen cyclischen Anhydride. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6-Hexandiol, 1,10-Decandiol, 1,12-Dodecandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, oder Ester der Kohlensäure mit Umsetzungsprodukten der genannten Diole und ε-Caprolacton, Kondensationsprodukte von ω-Hydroxycarbonsäuren, wie ω-Hydroxycapronsäure oder Polymerisationsprodukte von Lactonen, z.B. gegebenenfalls substituierten ε-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen zahlenmittlere Molekulargewichte M̅ₙ von 500 bis 10000 und können einzeln oder in Form von Mischungen untereinander zur Anwendung kommen. Ganz besonders geeignete Polyester-Diole haben ein Molekulargewicht M̅ₙ von 800 bis 4000 g/mol und basieren auf Adipinsäure als Säurekomponente sowie 1,4-Butandiol, 1,6-Hexandiol und 2,2-Dimethyl-1,3-propandiol und deren Mischungen als Alkoholkomponente Der Anteil von Polyester-Diolen in der Polyolkomponente c) beträgt < 50 Mol-%, vorzugsweise < 30 Mol-%, besonders bevorzugt < 15 Mol-% und ganz besonders bevorzugt 0 Mol-%.

Als Produkte d1) in d) können handelsübliche Verbindungen der allgemeinen Formel SiO₂ eingesetzt werden. Damit sind alle Formen von Siliziumdioxid (auch als Silica bezeichnet) gemeint. Beispielhaft genannt seien modifizierte und unmodifizierte pyrogene Kieselsäuren, Kieselgur, Kieselalgen, Kieselglas, nicht kristallines amorphes SiO₂, wie es in der Natur z. B. in Geyserit, Tachylit oder Tektit vorkommt, kristallines SiO₂, wie es in der Natur z. B. in Moganit, Quarz oder Tridymit vorkommt oder amorphes, synthetisch hergestelltes SiO₂.

Als Polyorganosiloxane d2) und d3) in d) werden Verbindungen der allgemeinen Formel (R₂SiO)ₙ, wobei R einen organischen Kohlenwasserstoffrest darstellt, der sowohl linear als auch verzweigt aufgebaut sein kann, und 1 bis 27 Kohlenstoffatome aufweist, eingesetzt. Von den Wiederholungseinheiten liegen mindestens 3 und höchstens 8000 vor. Die Polyorganosiloxane d2) und d3) können in Substanz oder als Masterbatch in einer Trägersubstanz zugegeben werden. Als Trägersubstanz kommen thermoplastische Elastomere in Frage, wie beispielsweise Polyetherester, Polyesterester, Thermoplastische Polyurethane (TPU), Styrol-Ethylen-Butadien-Styrol (SEBS), AcrylnitrilButadien-Styrol (ABS), Styrol-Acrylnitril (SAN), Polyamid (PA), Acrylat-Styrol-Acrylat-Blockcopolymer (ASA), Polybutylenterephthalat (PBT), Polycarbonat (PC), Polyetherblockamid (PEBA), Polymethylmethacrylat (PMMA), Polyoxymethylen (POM) oder Polyvinylchlorid (PVC). Bevorzugt sind Thermoplastische Polyurethane, besonders bevorzugt aliphatische Thermoplastische Polyurethane

Die Komponente d) kann bereits bei der Herstellung des TPU, z. B. in ein Gehäuse eines Reaktionsextruders, den TPU-Rohstoffen, z. B. der Polyolmischung oder einem einzelnen Polyol bei getrennter Dosierung, dem Kettenverlängerer bzw. der Kettenverlängerermischung bei mehr als einem Kettenverlängerer oder nach der Herstellung des TPU dem fertigen TPU, z.B. mittels Kompoundierung, zugegeben werden. Bevorzugt wird die Komponente d) mittels Kompoundierung zugegeben.

Die relativen Mengen der Zerewitinoff-aktiven Verbindungen werden bevorzugt so gewählt, dass das Verhältnis der Anzahl der Isocyanatgruppen zu der Anzahl der gegenüber Isocyanat reaktiven Gruppen 0,9:1 bis 1,1:1 beträgt.

Geeignete Katalysatoren e) sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen, Wismuthverbindungen oder Zinnverbindungen, wie Zinndiacetat, Zinndioctoat, Zinndilaurat oder die Zinndialkylsalze aliphatischer Carbonsäuren, wie Dibutylzinndiacetat oder Dibutylzinndilaurat oder ähnliche. Bevorzugte Katalysatoren sind organische Metallverbindungen, insbesondere Titansäureester, Eisen-, Zinn-und Wismuthverbindungen. Die Gesamtmenge an Katalysatoren in den erfindungsgemäßen TPU beträgt in der Regel vorzugsweise 0 bis 5 Gew.-%, bevorzugt 0 bis 2 Gew.-%, bezogen auf die Gesamtmenge an TPU.

Die erfindungsgemäßen, thermoplastischen Polyurethane können Hilfs- und Zusatzstoffe f) enthalten. Typische Hilfs- und Zusatzstoffe sind Gleitmittel und Entformungsmittel, wie Fettsäureester, deren Metallseifen, Fettsäureamide, Fettsäureesteramide, Antiblockmittel, Flammschutzmittel, Weichmacher (wie z.B. beschrieben von M. Szycher in M. Szycher's Handbook of Polyurethanes, 1999, CRC Press, Seite 8-28 bis 8-30; beispielhaft seien genannt Phosphate, Carboxylate (wie z.B. Phthalate, Adipate, Sebacate), Silikone und Alkylsulfonsäureester), Inhibitoren, Stabilisatoren gegen Hydrolyse, Hitze und Verfärbung, Lichtstabilisatoren (vorzugsweise UV-Stabilisatoren, Antioxidantien und/oder HALS-Verbindungen; nähere Angaben sind der Fachliteratur zu entnehmen und beispielsweise in Plastics Additives Handbook, 2001 5th. Ed., Carl Hanser Verlag, München beschrieben), Farbstoffe, Pigmente, anorganische und/oder organische Füllstoffe, fungistatisch und bakteriostatisch wirkende Substanzen und deren Mischungen.

Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 , dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere (ABS), insbesondere ABS. Auch andere Elastomere wie Kautschuk, Ethylen/Vinylacetatcopolymere, Styrol/Butadiencopolymere sowie andere TPU können verwendet werden.

Die Zugabe der Hilfs- und Zusatzstoffe f) kann während des Herstellprozesses des TPU und/oder während einer zusätzlichen Kompoundierung des TPU erfolgen.

Gegenüber Isocyanaten reagierende, monofunktionelle Verbindungen können in Anteilen bis zu 2 Gew.-%, bezogen auf das TPU, als sogenannte Kettenabbrecher g) eingesetzt werden. Geeignet sind z.B. Monoamine, wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die erfindungsgemäßen Zusammensetzungen werden vorzugsweise im Spritzgießverfahren, Extrusionsverfahren und/ oder Powder-Slush-Verfahren eingesetzt.

Die erfindungsgemäßen Zusammensetzungen werden bevorzugt zur Herstellung von wärmebeständigen Formteilen und Häuten mit sehr guter mechanischer und chemischer Oberflächenbeständigkeit, insbesondere hoher Kratzfestigkeit, sehr hoher Licht- und Wetterbeständigkeit und sehr guter Lösemittel- und Chemikalienbeständigkeit eingesetzt.

Die erfindungsgemäßen Zusammensetzungen werden bevorzugt zur Herstellung von wärmebeständigen, großflächigen Formteilen mit sehr guter mechanischer und chemischer Oberflächenbeständigkeit, insbesondere hoher Kratzfestigkeit, sehr hoher Licht- und Wetterbeständigkeit und sehr guter Lösemittel- und Chemikalienbeständigkeit eingesetzt.

Bevorzugt werden die erfindungsgemäßen Zusammensetzungen für die Innenausstattung und als Außenanbauteile von Kraftfahrzeugen verwendet. Besonders bevorzugt werden die erfindungsgemäßen Zusammensetzungen als Außenanbauteile von Kraftfahrzeugen verwendet.

Die Erfindung soll anhand der nachfolgenden Beispiele näher erläutert werden.

### Beispiele

### Verwendete Abkürzungen:

- Desmophen^{®} C 2201: Polycarbonatdiol mit einem Molekulargewicht von Mₙ = 2000 g/mol; Produkt der Bayer MaterialScience AG
- Desmophen^{®} C XP 2613: Polycarbonatdiol mit einem Molekulargewicht von Mₙ = 2000 g/mol; Produkt der Bayer MaterialScience AG
- Acclaim^{®} 2220N: Polypropylenoxid-/Polyethylenoxidpolyol mit einem Molekulargewicht von 2250 g/mol, Produkt der Bayer MaterialScience AG
- Polyester PE225B: Adipinsäure/Butandiolester mit einem Molekulargewicht von 2250g/mol, Produkt der Bayer MaterialScience AG
- Terathane^{®} 1000: Polytetramethylenglykol mit einem Molekulargewicht von 1000 g/mol, Produkt von INVISTA (Deutschland) GmbH
- Terathane^{®} 2000: Polytetramethylenglykol mit einem Molekulargewicht von 2000 g/mol, Produkt von INVISTA (Deutschland) GmbH
- HDI: 1,6-Hexamethylendiisocyanat (Bayer MaterialScience AG)
- HDO: 1,6-Hexandiol (Lanxess AG)
- DDO: 1,12-Dodecandiol (Beckmann-Kenko GmbH, Bassum Germany)
- HQEE: 1,4-Bis-(2-hydroxyethoxy)-benzol (Saltigo GmbH)
- Cap-HDO: Kettenverlängerer auf Basis ε-Caprolacton und 1,6-Hexandiol gemäß EP 1 854 818 A1, Seite 6, Zeile 5. (Zwischenprodukt Bayer MaterialScience AG)
- C12^{®} DM: Gemisch aus C6 - C12 Diolen (INVISTA Deutschland GmbH)
- Stabaxol^{®} P200: Polycarbodiimid der RheinChemie Rheinau GmbH
- Irganox^{®} 1010: Antioxidant der Firma Ciba Specialty Chemicals GmbH
- Tinuvin^{®} 234: Licht-Stabilisator auf Basis eines Benzotriazols der Firma Ciba Specialty Chemicals GmbH
- Licowax^{®} E: Formtrennmittel (Clariant GmbH)
- K-Kat^{®} 348: Wismut-Katalysator (King Industries)
- DBTL: Dibutylzinndilaurat
- MB40-817^{®}: Siloxan-Masterbatch von Dow Corning, enthaltend hochmolekulares Polyorganosiloxan (n∼3000), Siliciumdioxid und ein aliphatisches TPU
- MB50-027^{®}: Siloxan-Masterbatch von Dow Corning, enthaltend hochmolekulares Polyorganosiloxan (n∼3000) und ein aliphatisches TPU
- M350^{®}: Polyorganosiloxan mit n∼100-150; Silikonöl der Firma GE Silicones

### Herstellung eines aliphatischen TPU (TPU-1):

Ein Gemisch aus 984,2 g Desmophen^{®} C 2201, 297,3 g HQEE, 231,8 g Cap-HDO, 6,1 g Irganox^{®} 1010 und 0,98 g DBTL wurde unter Rühren mit einem Flügelrührer mit einer Drehzahl von 500 Umdrehungen pro Minute (UpM) auf 110°C erhitzt. Danach wurden 504,0 g HDI in einer Portion zugegeben. Anschließend wurde bis zum maximal möglichen Viskositätsanstieg gerührt und danach das TPU ausgegossen. Das Material wurde 30 min. bei 80°C thermisch nachbehandelt und anschließend granuliert. Dieses Material wurde als Basismaterial für die Beispiele 1 bis 3 und 10 verwendet.

### Herstellung eines aliphatischen TPU (TPU-2):

Ein Gemisch aus 1029,4 g Desmophen^{®} C XP 2613, 202,5 g DDO und 4,5 g Irganox^{®} 1010 wurde unter Rühren mit einem Flügelrührer mit einer Drehzahl von 500 Umdrehungen pro Minute (UpM) auf 110°C erhitzt. Danach wurden 252,0 g HDI zugegeben. Anschließend wurde bis zum maximal möglichen Viskositätsanstieg gerührt und danach das TPU ausgegossen. Das Material wurde 30 min. bei 80°C thermisch nachbehandelt und anschließend granuliert. Dieses Material wurde als Basismaterial für die Beispiele 4 bis 6 verwendet.

### Herstellung eines aliphatischen TPU (TPU-3):

Ein Gemisch aus 1001,8 g Desmophen^{®} C 2201, 177,3 g HDO, 4,5 g Irganox^{®} 1010, und 1,0 g K-Kat 348 wurde unter Rühren mit einem Flügelrührer mit einer Drehzahl von 500 Umdrehungen pro Minute (UpM) auf 110°C erhitzt. Danach wurden 333,5g HDI in einer Portion zugegeben. Anschließend wurde bis zum maximal möglichen Viskositätsanstieg gerührt und danach das TPU ausgegossen. Das Material wurde 30 min. bei 80°C thermisch nachbehandelt und anschließend granuliert. Dieses Material wurde als Basismaterial für die Beispiele 7 bis 9 verwendet.

### Herstellung eines aliphatischen TPU (TPU-4):

Ein Gemisch aus 984,2 g Desmophen^{®} C 2201, 297,3 g HQEE, 179,5 g C12^{®}DM, 5,9 g Irganox^{®} 1010 und 0,98 g DBTL wurde unter Rühren mit einem Flügelrührer mit einer Drehzahl von 500 Umdrehungen pro Minute (UpM) auf 110°C erhitzt. Danach wurden 492,2 g HDI in einer Portion zugegeben. Anschließend wurde bis zum maximal möglichen Viskositätsanstieg gerührt und danach das TPU ausgegossen. Das Material wurde 30 min. bei 80°C thermisch nachbehandelt und anschließend granuliert.

### Herstellung eines aliphatischen TPU (TPU-5):

Ein Gemisch aus 1001,8 g Desmophen^{®} C XP 2613, 297,3 g HQEE, 231,8 g Cap-HDO und 6,1 g Irganox^{®} 1010 wurde unter Rühren mit einem Flügelrührer mit einer Drehzahl von 500 Umdrehungen pro Minute (UpM) auf 110°C erhitzt. Danach wurden 504,0 g HDI in einer Portion zugegeben. Anschließend wurde bis zum maximal möglichen Viskositätsanstieg gerührt und danach das TPU ausgegossen. Das Material wurde 30 min. bei 80°C thermisch nachbehandelt und anschließend granuliert.

### Herstellung eines aliphatischen TPU (TPU-6):

Ein Gemisch aus 1001,8 g Desmophen^{®} C XP 2613, 297,3 g HQEE, 179,5 g C12^{®}DM und 5,9 g Irganox^{®} 1010 wurde unter Rühren mit einem Flügelrührer mit einer Drehzahl von 500 Umdrehungen pro Minute (UpM) auf 110°C erhitzt. Danach wurden 492,2 g HDI in einer Portion zugegeben. Anschließend wurde bis zum maximal möglichen Viskositätsanstieg gerührt und danach das TPU ausgegossen. Das Material wurde 30 min. bei 80°C thermisch nachbehandelt und anschließend granuliert.

### Herstellung eines aliphatischen TPU (TPU-7):

Ein Gemisch aus 1001,8 g Desmophen^{®} C XP 2613, 423,6 g C12^{®}DM und 5,7 g Irganox^{®} 1010 wurde unter Rühren mit einem Flügelrührer mit einer Drehzahl von 500 Umdrehungen pro Minute (UpM) auf 110°C erhitzt. Danach wurden 452,8 g HDI in einer Portion zugegeben. Anschließend wurde bis zum maximal möglichen Viskositätsanstieg gerührt und danach das TPU ausgegossen. Das Material wurde 30 min. bei 80°C thermisch nachbehandelt und anschließend granuliert.

### Herstellung eines aliphatischen TPU (TPU-8):

Ein Gemisch aus 984,2 g Desmophen^{®} C 2201, 423,6 g C12^{®}DM, 5,6 g Irganox^{®} 1010, und 0,98 g DBTL wurde unter Rühren mit einem Flügelrührer mit einer Drehzahl von 500 Umdrehungen pro Minute (UpM) auf 110°C erhitzt. Danach wurden 452,8 g HDI in einer Portion zugegeben. Anschließend wurde bis zum maximal möglichen Viskositätsanstieg gerührt und danach das TPU ausgegossen. Das Material wurde 30 min. bei 80°C thermisch nachbehandelt und anschließend granuliert.

### Herstellung eines aliphatischen TPU (TPU-9):

Ein Gemisch aus 506,5 g Desmophen^{®} C 2201, 242,1 g Acclaim 2220N, 214,7 g HQEE, 167,4 g Cap-HDO, 4,5 g Irganox^{®} 1010, und 0,70 g DBTL wurde unter Rühren mit einem Flügelrührer mit einer Drehzahl von 500 Umdrehungen pro Minute (UpM) auf 110°C erhitzt. Danach wurden 364,0 g HDI in einer Portion zugegeben. Anschließend wurde bis zum maximal möglichen Viskositätsanstieg gerührt und danach das TPU ausgegossen. Das Material wurde 30 min. bei 80°C thermisch nachbehandelt und anschließend granuliert.

### Herstellung eines aliphatischen TPU (TPU-10):

Ein Gemisch aus 541,5 g Desmophen^{®} C 2201, 206,7 g PE225B, 214,3 g HQEE, 167,1 g Cap-HDO, 2,1 g Stabaxol^{®} P200, 4,5 g Irganox^{®} 1010, und 0,70 g DBTL wurde unter Rühren mit einem Flügelrührer mit einer Drehzahl von 500 Umdrehungen pro Minute (UpM) auf 110°C erhitzt. Danach wurden 363,2 g HDI in einer Portion zugegeben. Anschließend wurde bis zum maximal möglichen Viskositätsanstieg gerührt und danach das TPU ausgegossen. Das Material wurde 30 min. bei 80°C thermisch nachbehandelt und anschließend granuliert.

### Herstellung eines aliphatischen TPU (TPU-11):

Ein Gemisch aus 524,1 g Desmophen^{®} C 2201, 139,2 g Terathane^{®} 1000, 239,3 g HQEE, 186,6 g Cap-HDO, 4,5 g Irganox^{®} 1010, und 0,70 g DBTL wurde unter Rühren mit einem Flügelrührer mit einer Drehzahl von 500 Umdrehungen pro Minute (UpM) auf 110°C erhitzt. Danach wurden 405,6 g HDI in einer Portion zugegeben. Anschließend wurde bis zum maximal möglichen Viskositätsanstieg gerührt und danach das TPU ausgegossen. Das Material wurde 30 min. bei 80°C thermisch nachbehandelt und anschließend granuliert.

### Herstellung eines aliphatischen TPU (TPU-12):

Ein Gemisch aus 588,7 g Desmophen^{®} C 2201, 147,2 g Terathane^{®} 2000, 218,4 g HQEE, 170,3 g Cap-HDO, 4,5 g Irganox^{®} 1010, und 0,70 g DBTL wurde unter Rühren mit einem Flügelrührer mit einer Drehzahl von 500 Umdrehungen pro Minute (UpM) auf 110°C erhitzt. Danach wurden 370,2 g HDI in einer Portion zugegeben. Anschließend wurde bis zum maximal möglichen Viskositätsanstieg gerührt und danach das TPU ausgegossen. Das Material wurde 30 min. bei 80°C thermisch nachbehandelt und anschließend granuliert.

Zu den gemäß den allgemeinen Beschreibungen hergestellten TPU-Granulaten wurden Masterbatche bzw. Silikonöl (die exakten Rezepturen sind der Tabelle 1 zu entnehmen.) und Farbruß (2 Gew.-%, bezogen auf TPU, Elftex^{®} 435 von der Firma Cabot) zugegeben. Auf einem Extruder des Typs DSE 25, 4 Z, 360 Nm mit folgendem Aufbau:
1. kalte Einzugszone mit Förderelementen,
2. erste Heizzone (165°C) mit erster Knetzone,
3. zweite Heizzone (175°C) mit Förderelemente und zweiter Knetzone,
4. dritte Heizzone (180°C) mit dritter Knetzone, Förderelemente und Vakuumentgasung,
5. Umlenkkopf (185°C) und Düse (180°C),
mit einer Förderleistung von 10 kg/h bei einer Drehzahl von 220 U/min, wurden die Gemische extrudiert, anschließend mit einem Strang-Granulator zu Granulat und mit einer Spritzgießmaschine vom Typ Arburg Allrounder 470S in einem Temperaturbereich von 180 bis 230 °C und in einem Druckbereich von 650 bis 750 bar bei einem Einspritzstrom von 10 bis 35 cm³/s zu Spritzplatten verarbeitet.

### Bestimmung der technischen Verarbeitbarkeit:

Beim Spritzgießen wurde besonderes auf die technische Verarbeitbarkeit bei verschiedenen Temperaturen (180 bis 230 °C) und Drücken (650 bis 750 bar) geachtet. Dabei wurde z.B. das Einzugsverhalten im Trichter der Spritzgießmaschine bewertet. Es wurde kontrolliert, ob Delaminierung, Störungen und/oder ein Belag auf dem Formteil sichtbar wurden. Ebenfalls wurde beurteilt, wie schnell ein Formteilbelag gebildet wurde und wie stark dieser war. Dabei wurde folgende Benotung zwecks Beurteilung der Belagsbildung eingeführt:
Note 1: kein Belag sichtbar;
Note 2: wenig Belag sichtbar und wird auch nicht stärker;
Note 3: wenig Belag sichtbar, wird jedoch nach weiteren Schüssen immer stärker;
Note 4: schnell viel Belag, der auch rasant stärker wird bei weiteren Schüssen;

Nur eine Benotung mit 1 ist sehr gut, eine Benotung mit 2 ist akzeptabel.

### Bestimmung der Oberflächenempfindlichkeit

Für die Bestimmung der Oberflächenempfindlichkeit wurden zwei Tests durchgeführt:
Crockmetertest: Diese Tests wurden mit einem Crockmeter der Firma James H. Heal & Co. Ltd., Richmond Works Halifax West Yorkshire HX3 6EP England, Modell 255A, mit Reibfinger an einem Spritzgießkörper mit einer genarbten Oberfläche durchgeführt und zwar unter folgenden Bedingungen:
Rubbeldruck: 10N, Rubbelweg: 260 mm, Zeit pro Rubbel: 15 sec., Anzahl der Hübe: 100.
Durchführung: Das Baumwollscheuergewebe wurde unter die Auflagefläche gespannt und die Prüfung unter den oben beschriebenen Bedingungen durchgeführt. Dabei wurde die Beschädigung der Oberfläche qualitativ beurteilt. Die Benotung "schlecht" bedeutet ein visuell deutlich sichtbarer Abrieb der Oberfläche. Die Benotung "gut" bedeutet kein oder kaum sichtbarer Abrieb.
Kratztest: Dieser Test wurde mit einem Erichsen-Härteprüfstab, Modell 318 mit der Gravierspitze Nr. 2 (in Anlehnung an die ISO 1518, 1,0 mm Durchmesser) mit einem Hub und einer Kraft von 10 N auf einer genarbte Oberfläche durchgeführt (Strich von 10 mm Länge mit einer Geschwindigkeit von 10 mm/s). Dabei wurde die Beschädigung der Oberfläche qualitativ beurteilt. Die Benotung "schlecht" bedeutet eine visuell deutlich sichtbare Beschädigung der Oberfläche. Die Benotung "gut" bedeutet keine oder kaum sichtbare Oberflächenbeschädigung.

### Bestimmung des Ausblühverhaltens der Zusammensetzungen

Zur Bestimmung des Ausblühverhaltens wurden drei Testbedingungen gewählt, denen die Spritzplatten hergestellt aus den Zusammensetzungen der Beispiele unterworfen wurden. Die Platten wurden anschließend qualitativ auf Belagsbildung untersucht. Die Testbedingungen waren die Folgenden:

| | |
|---|---|
| Test 1. | Lagerung bei Raumtemperatur über einen Zeitraum von 4 Wochen |
| Test 2. | Lagerung bei 30 °C in destillierten Wasser über einen Zeitraum von 4 Wochen |
| Test 3. | Lagerung bei 60 °C im Trockenschrank bei einer relativen Luftfeuchtigkeit von 95% über einen Zeitraum von 4 Wochen. |

### Bestimmung der Wärmelagerungsbeständigkeit und der Hydrolysebeständigkeit der Zusammensetzungen:

Wärmelagerung: Die Spritzplatten wurden hängend bei 120 °C (± 2 °C Toleranz) für 500 Stunden gelagert.

Hydrolyselagerung: Die Spritzplatten wurden hängend bei 80 °C (± 2 °C Toleranz) in entionisiertem Wasser für 500 Stunden gelagert.

Die Ergebnisse der Untersuchungen sind der folgenden Tabelle 2 zu entnehmen.

**Tabelle 1: Ergebnisse**

| **Beispiel** | **Art des Beispiels, TPU** | **Batch; Menge an MB50-027^{®} [%] oder MB40-817^{®} (enthält Silica) [Gew.-%]**** | **Menge M350^{®} [%]** | **Technische Verarbeitbarkeit (Belag)** | **Crockmetertest** | **Kratztest** | **Test 1 (RT)** | **Test 2 (30°C H₂O)** | **Test 3 (60°C; 95% rel. Luftfeuchte)** |
|---|---|---|---|---|---|---|---|---|---|
| **1** | Vergleich, TPU-1 | kein | kein | Note 3 | Schlecht | Schlecht | Kein Belag | Kein Belag | Kein Belag |
| **2*** | Vergleich, TPU-1 | MB50-027; 2,5 | 0,5 | Note 2 | Gut | Gut | Kein Belag | Kein Belag | Geringer Belag |
| **3** | Erfindungsgemäß, TPU-1 | MB40-817; 3,6 | 0,5 | Note 1 | Gut | Gut | Kein Belag | Kein Belag | Kein Belag |
| **4** | Vergleich, TPU-2 | Kein | Kein | Note 3 | Schlecht | Schlecht | Kein Belag | Kein Belag | Kein Belag |
| **5*** | Vergleich, TPU-2 | MB50-027; 2,5 | Kein | Note 3 | Gut | Gut | Kein Belag | Kein Belag | Kein Belag |
| **6** | Erfindungsgemäß, TPU-2 | MB40-817; 4,0 | 0,5 | Note 1 | Gut | Gut | Kein Belag | Kein Belag | Kein Belag |
| **7** | Vergleich, TPU-3 | kein | 2,5 | Note 1 | Gut | Schlecht | Kein Belag | Geringer Belag | Geringer Belag |
| **8** | Erfindungsgemäß, TPU-3 | MB40-817; 4,0 | 1 | Note 1 | Gut | Gut | Kein Belag | Kein Belag | Kein Belag |
| **9** | Erfindungsgemäß, TPU-3 | MB40-817; 5,0 | 0,5 | Note 1 | Gut | Gut | Kein Belag | Kein Belag | Kein Belag |
| **10** | Erfindungsgemäß, TPU-1 | MB40-817; 6,0 | 0,5 | Note 1 | Gut | Gut | Kein Belag | Kein Belag | Kein Belag |
| **11** | Erfindungsgemäß, TPU-9 | MB40-817, 7,4 | 1 | Note 1 | Gut | Gut | Kein Belag | Kein Belag | Kein Belag |
| **12** | Vergleich, TPU-9 | kein | 2,0 | Note 2 | Schlecht | Schlecht | Kein Belag | Geringer Belag | Geringer Belag |
| **13*** | Vergleich, TPU 9 | MB50-027, 3,5 | 1,0 | Note 3 | Gut | Gut | Kein Belag | Kein Belag | Geringer Belag |
| **14** | Erfindungsgemäß, TPU-10 | MB40-817, 7.4 | 1,0 | Note 1 | Gut | Gut | Kein Belag | Kein Belag | Kein Belag |
| **15*** | Vergleich, TPU-10 | MB50-027, 7,4 | 1,0 | Note 3 | Gut | Gut | Kein Belag | Kein Belag | Geringer Belag |
| **16** | Erfindungsgemäß. TPU-11 | MB40-817, 7,4 | 1,0 | Note 1 | Gut | Gut | Kein Belag | Kein Belag | Kein Belag |
| **17** | Vergleich, TPU-11 | kein | kein | Note 3 | Schlecht | Schlecht | Kein Belag | Kein Belag | Kein Belag |
| **18** | Erfindungsgemäß, TPU-12 | MB40-817, 7,4 | 1,0 | Note 1 | Gut | Gut | Kein Belag | Kein Belag | Kein Belag |
| **19*** | Vergleich, TPU-12 | MB50-027, 6.0 | 1,5 | Note 2 | Gut | Gut | Kein Belag | Kein Belag | Geringer Belag |

| | | | | | | | | | |
|---|---|---|---|---|---|---|---|---|---|
| *Bei diesen Spritzversuchen traten deutliche Oberflächenstörungen und/oder Delaminierung auf. **** bezogen auf das Gesamtgewicht der Zusammensetzung** | | | | | | | | | |

**Tabelle 2: Ergebnisse Wärmelagerung und Hydrolysetest**

| | Nach Wärmelagerung | | Nach Hydrolyselagerung | |
|---|---|---|---|---|
| | %Reißfestigkeit | %Reißdehnung | %Reißfestigkeit | %Reißdehnung |
| Vergleich* | 84,7 | 85,2 | 87,9 | 86,4 |
| Beispiel 3 | 90,6 | 99,5 | 94,1 | 92,1 |
| Beispiel 11 | 87,5 | 98,9 | 98,8 | 97,0 |
| Beispiel 14 | 95,7 | 100,3 | 96,0 | 90,5 |
| Beispiel 16 | 93,3 | 105,9 | 98,9 | 93,7 |
| Beispiel 18 | 87,5 | 102,8 | 92,6 | 92,8 |

| | | | | |
|---|---|---|---|---|
| *Beispiel 3 aus der EP 2383305 (europäische Anmelde-Nr 11163772.4-1214) | | | | |

Die prozentuale Änderung von Reißfestigkeit und Reißdehnung errechnet sich folgendermaßen: Wert Reißfestigkeit bzw. Reißdehnung nach Hydrolyse- bzw. Wärmelagerung dividiert durch Wert Reißfestigkeit bzw. Reißdehnung vor Hydrolyse- bzw. Wärmelagerung multipliziert mit 100 ergibt %Reißfestigkeit bzw. %Reißdehnung.

### Diskussion der Prüfergebnisse:

In den Beispielen 1, 4 und 17 wurde kein siloxanhaltiges Masterbatch und kein Silikonöl verwendet. Die technische Verarbeitbarkeit und die Oberflächenbeständigkeit der erhaltenen Platten ist schlecht. Bei Beispiel 7 und 12 wurde kein siloxanhaltiges Masterbatch, aber Silikonöl verwendet. Die technische Verarbeitbarkeit ist gut, aber der Kratztest wurde nicht bestanden. Bei der Verwendung von MB50-827^{®} (enthält hochmolekulares Polyorganosiloxan) (Beispiele 2, 5, 13, 15 und 19) sind die Ergebnisse aus dem Crockmetertest gut und der Kratztest wurde bestanden, allerdings war die technische Verarbeitbarkeit nicht optimal, es trat Delaminierung auf.

Die Zusammensetzungen aus den erfindungsgemäßen Beispielen 3, 6, 8 bis 11, 14, 16 und 18, die sowohl ein siloxan- und silicahaltiges Masterbatch (MB40-817^{®}) und Silikonöl enthalten, erfüllten alle Anforderungen an die Oberflächenempfindlichkeit, zeigten eine sehr gute technische Verarbeitbarkeit bei großem Verarbeitungsfenster und es gab bei allen Temperatur und Druckeinstellungen bei der Spritzgußverarbeitung keine Delaminierungsprobleme. Es war eine problemlose Dauerverarbeitung möglich.

Bezüglich Belagsbildung waren bei Raumtemperaturlagerung die Zusammensetzungen aus allen Beispielen gut. Die Beispiele 7 und 12 mit relativ hoher Silikonölmenge zeigten bei 30 °C Wasserlagerung und bei 60 °C Lagerung einen geringen farblosen Belag. Die Beispiele 2, 13, 15 und 19 zeigten bei 60 °C Lagerung einen geringen farblosen Belag.

Nach der Wärme- und Hydrolyselagerung zeigten die erfindungsgemäßen Beispiele 3, 11, 14, 16 und 18 deutlich bessere Ergebnisse bezüglich Reißfestigkeit und Reißdehnung als das Vergleichsbeispiel auf Basis einer nicht erfindungsgemäßen Polyolzusammensetzung. Diese Ergebnisse zeigen das sehr gute Hydrolyse- und Wärmebeständigkeitsniveau der erfindungsgemäßen TPU-Produkte auf.

## Patentansprüche

1. Zusammensetzung, die erhältlich ist aus einem thermoplastischen Polyurethan erhältlich aus:
a) einer Isocyanatkomponente, im Wesentlichen bestehend aus
a1) 50 bis 100 Mol-% 1,6-Hexamethylendiisocyanat und
a2) 0 bis 50 Mol-% eines aliphatischen Diisocyanats, das von 1,6-Hexamethylendiisocyanat verschieden ist, oder einer Mischung solcher aliphatischen Diisocyanate und/oder cycloaliphatischen Diisocyanate.
b) einer niedermolekularen Polyolkomponente, im Wesentlichen bestehend aus
b1) 30 bis 100 Mol-% wenigstens eines difunktionellen Kettenverlängerers mit einem zahlenmittleren Molekulargewicht M̅ₙ von 76 bis 286 g/mol und
b2) 0 bis 70 Mol-% eines oder mehrerer Kettenverlängerer mit einem zahlenmittleren Molekulargewicht M̅ₙ von 104 bis 500 g/mol und mit den allgemeinen Formeln (I) oder (II) 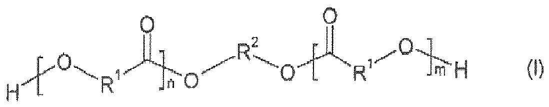 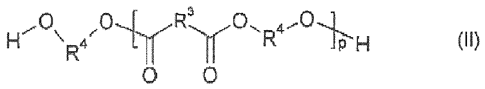 mit
R1: verzweigte oder unverzweigte Alkylenreste mit 1 bis 12 C-Atomen oder substituierte oder nicht-substituierte Alkarylenreste mit 6 bis 24 C-Atomen,
R2, R4: verzweigte oder unverzweigte Alkylenreste oder Alkoxyalkylreste mit 1 bis 12 C-Atomen oder substituierte oder nicht-substituierte Alkarylenreste oder substituierte oder nicht substituierte Alkoxyarylenreste mit 6 bis 24 C-Atomen,
R3: verzweigte oder unverzweigte Alkylenreste mit 1 bis 8 C-Atomen oder substituierte oder nicht-substituierte Alkarylenreste mit 6 bis 20 C-Atomen,
substituierte oder nicht-substituierte Arylenreste mit 6 bis 20 C-Atomen, substituierte oder nicht-substituierte Aralkylenreste mit 6 bis 20 C-Atomen, n, m = unabhängig voneinander eine ganze Zahl von 0 bis 10 und n+m ≥ 1 und p = 1 bis 10 ist,
oder deren Gemische,
c) einer Polyolkomponente, im Wesentlichen bestehend aus
c1) 50 bis 100 Mol-% wenigstens eines Polycarbonatdiols mit einem zahlenmittleren Molekulargewicht M̅ₙ von 500 bis 3000 g/mol und
c2) 0 bis 50 Mol-% eines anderen, von Polycarbonatdiolen verschiedenen polymeren Diols mit einem zahlenmittleren Molekulargewicht M̅ₙ von 450 bis 6000 g/mol,
wobei das Verhältnis der Anzahl der Isocyanatgruppen in Komponente a) zu der Anzahl der gegenüber Isocyanat reaktiven Gruppen in Komponenten b), c) und gegebenenfalls g) 0,9:1 bis 1,1:1 beträgt,
unter Zugabe von
e) gegebenenfalls Katalysatoren,
f) gegebenenfalls Zusatzmitteln und/oder Hilfsstoffen,
g) gegebenenfalls monofunktionellen Kettenabbrechern,
und welche weiterhin enthält
d) 0,4 bis 10 Gew.-%, bezogen auf das Gesamtgewicht der Zusammensetzung, eines Gemisches aus
d1) 0,1 bis 4 Gew.-%, bezogen auf das Gesamtgewicht der Zusammensetzung, mindestens eines amorphen und/oder kristallinen Siliciumdioxids,
und speziellen Polyorganosiloxangemischen der allgemeinen Formel (R₂SiO)ₙ, wobei R einen organischen Kohlenwasserstoffrest darstellt, der sowohl linear als auch verzweigt aufgebaut sein kann, und 1 bis 27 Kohlenstoffatome aufweist, und n eine ganze Zahl von 3 bis 8000 ist, wobei das Polyorganosiloxangemisch aus
d2) 0 bis 2 Gew.-%, bezogen auf das Gesamtgewicht der Zusammensetzung, eines oder mehrerer Polyorganosiloxane (R₂SiO)ₙ mit n = 3 bis 300 und
d3) 0,2 bis 8 Gew.-%, bezogen auf das Gesamtgewicht der Zusammensetzung, eines oder mehrerer Polyorganosiloxane (R₂SiO)ₙ mit n = 1000 bis 8000 besteht.

2. Zusammensetzung gemäß Anspruch 1, **dadurch gekennzeichnet, dass** sie erhältlich ist aus einem thermoplastischen Polyurethan erhältlich aus
a) einer Isocyanatkomponente, im Wesentlichen bestehend aus
a1) 65 bis 100 Mol-% 1,6-Hexamethylendiisocyanat und
a2) 0 bis 35 Mol-% eines aliphatischen Diisocyanats, das von 1,6-Hexamethylendiisocyanat verschieden ist, oder einer Mischung solcher aliphatischen Diisocyanate und/oder cycloaliphatischen Diisocyanate.
b) einer niedermolekularen Polyolkomponente, im Wesentlichen bestehend aus
b1) 35 bis 100 Mol-% wenigstens eines difunktionellen Kettenverlängerers mit einem zahlenmittleren Molekulargewicht M̅ₙ von 90 bis 286 g/mol und
b2) 0 bis 65 Mol-% eines oder mehrerer Kettenverlängerer mit einem zahlenmittleren Molekulargewicht n von 104 bis 500 g/mol und mit den allgemeinen Formeln (I) oder (II) 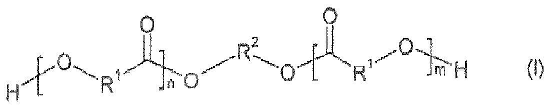 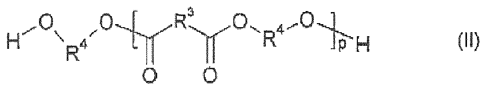 mit
R1: verzweigte oder unverzweigte Alkylenreste mit 1 bis 12 C-Atomen oder substituierte oder nicht-substituierte Alkarylenreste mit 6 bis 24 C-Atomen,
R2, R4: verzweigte oder unverzweigte Alkylenreste oder Alkoxyalkylreste mit 1 bis 12 C-Atomen oder substituierte oder nicht-substituierte Alkarylenreste oder substituierte oder nicht substituierte Alkoxyarylenreste mit 6 bis 24 C-Atomen,
R3: verzweigte oder unverzweigte Alkylenreste mit 1 bis 8 C-Atomen oder substituierte oder nicht-substituierte Alkarylenreste mit 6 bis 20 C-Atomen, substituierte oder nicht-substituierte Arylenreste mit 6 bis 20 C-Atomen, substituierte oder nicht-substituierte Aralkylenreste mit 6 bis 20 C-Atomen,
n, m = unabhängig voneinander eine ganze Zahl von 0 bis 10 und n+m ≥ 1 und p = 1 bis 10 ist
oder deren Gemische,
c) einer Polyolkomponente, im Wesentlichen bestehend aus
c1) 65 bis 100 Mol-% wenigstens eines Polycarbonatdiols mit einem zahlenmittleren Molekulargewicht M̅ₙ von 500 bis 3000 g/mol und
c2) 0 bis 35 Mol-% eines Polyetherdiols und/oder Polyesterdiols mit einem zahlenmittleren Molekulargewicht M̅ₙ von 450 bis 4000 g/mol,
wobei das Verhältnis der Anzahl der Isocyanatgruppen in Komponente a) zu der Anzahl der gegenüber Isocyanat reaktiven Gruppen in Komponenten b), c) und gegebenenfalls g) 0,9:1 bis 1,1:1 beträgt,
unter Zugabe von
e) gegebenenfalls Katalysatoren,
f) gegebenenfalls Zusatzmitteln und/oder Hilfsstoffen,
g) gegebenenfalls monofunktionellen Kettenabbrechern,
und welche weiterhin enthält
d) 0,4 bis 10 Gew.-%, bezogen auf das Gesamtgewicht der Zusammensetzung, eines Gemisches aus
d1) 0,1 bis 4 Gew.-%, bezogen auf das Gesamtgewicht der Zusammensetzung, mindestens eines amorphen und/oder kristallinen Siliciumdioxids,
und speziellen Polyorganosiloxangemischen der allgemeinen Formel(R₂SiO)ₙ, wobei R einen organischen Kohlenwasserstoffrest darstellt, der sowohl linear als auch verzweigt aufgebaut sein kann, und 1 bis 27 Kohlenstoffatome aufweist, und n eine ganze Zahl von 3 bis 8000 ist, wobei das Polyorganosiloxangemisch aus
d2) 0 bis 2 Gew.-%, bezogen auf das Gesamtgewicht der Zusammensetzung, eines oder mehrerer Polyorganosiloxane (R₂SiO)ₙ mit n = 3 bis 300 und d3) 0,2 bis 8 Gew.-%, bezogen auf das Gesamtgewicht der Zusammensetzung,
eines oder mehrerer Polyorganosiloxane (R₂SiO)ₙ mit n = 1000 bis 8000 besteht.

3. Zusammensetzung gemäß Anspruch 1, **dadurch gekennzeichnet, dass** sie erhältlich ist aus einem thermoplastischen Polyurethan erhältlich aus
a) einer Isocyanatkomponente, im Wesentlichen bestehend aus
a1) 70 bis 100 Mol-% 1,6-Hexamethylendiisocyanat und
a2) 0 bis 30 Mol-% eines aliphatischen Diisocyanats, das von 1,6-Hexamethylendiisocyanat verschieden ist, oder einer Mischung solcher aliphatischen Diisocyanate und/oder cycloaliphatischen Diisocyanate.
b) einer niedermolekularen Polyolkomponente, im Wesentlichen bestehend aus
b1) 35 bis 95 Mol-% wenigstens eines difunktionellen Kettenverlängerers mit einem zahlenmittleren Molekulargewicht M̅ₙ von 118 bis 286 g/mol und
b2) 5 bis 65 Mol-% eines oder mehrerer Kettenverlängerer mit einem zahlenmittleren Molekulargewicht n von 104 bis 500 g/mol und mit den allgemeinen Formeln (I) oder (II) 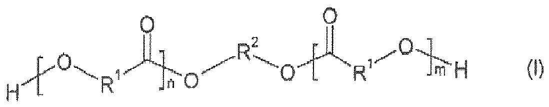 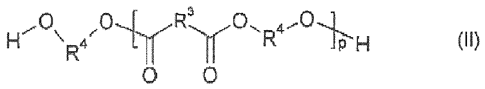 mit
R1: verzweigte oder unverzweigte Alkylenreste mit 1 bis 12 C-Atomen oder substituierte oder nicht-substituierte Alkarylenreste mit 6 bis 24 C-Atomen,
R2, R4: verzweigte oder unverzweigte Alkylenreste oder Alkoxyalkylreste mit 1 bis 12 C-Atomen oder substituierte oder nicht-substituierte Alkarylenreste oder substituierte oder nicht substituierte Alkoxyarylenreste mit 6 bis 24 C-Atomen,
R3: verzweigte oder unverzweigte Alkylenreste mit 1 bis 8 C-Atomen oder substituierte oder nicht-substituierte Alkarylenreste mit 6 bis 20 C-Atomen, substituierte oder nicht-substituierte Arylenreste mit 6 bis 20 C-Atomen, substituierte oder nicht-substituierte Aralkylenreste mit 6 bis 20 C-Atomen, n, m = unabhängig voneinander eine ganze Zahl von 0 bis 10 und
n+m ≥ 1 und p = 1 bis 10 ist
oder deren Gemische,
c) einer Polyolkomponente, im Wesentlichen bestehend aus
c1) 70 bis 100 Mol-% wenigstens eines Polycarbonatdiols mit einem zahlenmittleren Molekulargewicht M̅ₙ von 500 bis 2500 g/mol und
c2) 0 bis 30 Mol-% eines Polyetherdiols und/oder Polyesterdiols mit einem zahlenmittleren Molekulargewicht M̅ₙ von 450 bis 4000 g/mol,
wobei das Verhältnis der Anzahl der Isocyanatgruppen in Komponente a) zu der Anzahl der gegenüber Isocyanat reaktiven Gruppen in Komponenten b), c) und gegebenenfalls g) 0,9:1 bis 1,1:1 beträgt,
unter Zugabe von
e) gegebenenfalls Katalysatoren,
f) gegebenenfalls Zusatzmitteln und/oder Hilfsstoffen,
g) gegebenenfalls monofunktionellen Kettenabbrechern,
und weiterhin enthaltend
d) 0,4 bis 10 Gew.-%, bezogen auf das Gesamtgewicht der Zusammensetzung, eines Gemisches aus
d1) 0,1 bis 4 Gew.-%, bezogen auf das Gesamtgewicht der Zusammensetzung,
mindestens eines amorphen und/oder kristallinen Siliciumdioxids,
und speziellen Polyorganosiloxangemischen der allgemeinen Formel(R₂SiO)ₙ, wobei R einen organischen Kohlenwasserstoffrest darstellt, der sowohl linear als auch verzweigt aufgebaut sein kann, und 1 bis 27 Kohlenstoffatome aufweist, und n eine ganze Zahl von 3 bis 8000 ist, wobei das Polyorganosiloxangemisch aus
d2) 0 bis 2 Gew.-%, bezogen auf das Gesamtgewicht der Zusammensetzung, eines oder mehrerer Polyorganosiloxane (R₂SiO)ₙ mit n = 3 bis 300 und
d3) 0,2 bis 8 Gew.-%, bezogen auf das Gesamtgewicht der Zusammensetzung, eines oder mehrerer Polyorganosiloxane (R₂SiO)ₙ mit n = 1000 bis 8000 besteht.

4. Zusammensetzung gemäß Anspruch 1, **dadurch gekennzeichnet, dass** sie erhältlich ist aus einem thermoplastischen Polyurethan erhältlich aus
a) einer Isocyanatkomponente, im Wesentlichen bestehend aus 1,6-Hexamethylendiisocyanat
b) einer niedermolekularen Polyolkomponente, im Wesentlichen bestehend aus
b1) 40 bis 90 Mol-% wenigstens eines difunktionellen Kettenverlängerers mit einem zahlenmittleren Molekulargewicht M̅ₙ von 118 bis 286 g/mol und
b2) 10 bis 60 Mol-% eines oder mehrerer Kettenverlängerer mit einem zahlenmittleren Molekulargewicht n von 104 bis 500 g/mol und mit den allgemeinen Formeln (I) oder (II) 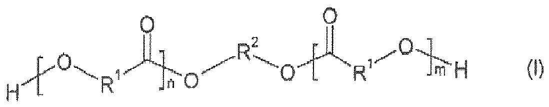 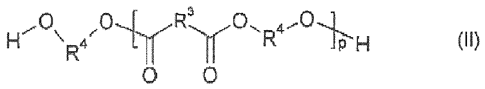 mit
R1: verzweigte oder unverzweigte Alkylenreste mit 1 bis 12 C-Atomen oder substituierte oder nicht-substituierte Alkarylenreste mit 6 bis 24 C-Atomen,
R2, R4: verzweigte oder unverzweigte Alkylenreste oder Alkoxyalkylreste mit 1 bis 12 C-Atomen oder substituierte oder nicht-substituierte Alkarylenreste oder substituierte oder nicht substituierte Alkoxyarylenreste mit 6 bis 24 C-Atomen,
R3: verzweigte oder unverzweigte Alkylenreste mit 1 bis 8 C-Atomen oder substituierte oder nicht-substituierte Alkarylenreste mit 6 bis 20 C-Atomen, substituierte oder nicht-substituierte Arylenreste mit 6 bis 20 C-Atomen, substituierte oder nicht-substituierte Aralkylenreste mit 6 bis 20 C-Atomen, n, m = unabhängig voneinander eine ganze Zahl von 0 bis 10 und
n+m ≥ 1 und p = 1 bis 10 ist
oder deren Gemische,
c) einer Polyolkomponente, im Wesentlichen bestehend aus
wenigstens einem Polycarbonatdiol mit einem zahlenmittleren Molekulargewicht M̅ₙ von 500 bis 2500 g/mol
wobei das Verhältnis der Anzahl der Isocyanatgruppen in Komponente a) zu der Anzahl der gegenüber Isocyanat reaktiven Gruppen in Komponenten b), c) und gegebenenfalls g) 0,9:1 bis 1,1:1 beträgt, unter Zugabe von
e) gegebenenfalls Katalysatoren,
f) gegebenenfalls Zusatzmitteln und/oder Hilfsstoffen,
g) gegebenenfalls monofunktionellen Kettenabbrechern,
und welche weiterhin enthält
d) 0,4 bis 10 Gew.-%, bezogen auf das Gesamtgewicht der Zusammensetzung, eines Gemisches aus
d1) 0,1 bis 4 Gew.-%, bezogen auf das Gesamtgewicht der Zusammensetzung, mindestens eines amorphen und/oder kristallinen Siliciumdioxids,
und speziellen Polyorganosiloxangemischen der allgemeinen Formel(R₂SiO)ₙ, wobei R einen organischen Kohlenwasserstoffrest darstellt, der sowohl linear als auch verzweigt aufgebaut sein kann, und 1 bis 27 Kohlenstoffatome aufweist, und n eine ganze Zahl von 3 bis 8000 ist, wobei das Polyorganosiloxangemisch aus
d2) 0 bis 2 Gew.-%, bezogen auf das Gesamtgewicht der Zusammensetzung, eines oder mehrerer Polyorganosiloxane (R₂SiO)ₙ mit n = 3 bis 300 und
d3) 0,2 bis 8 Gew.-%, bezogen auf das Gesamtgewicht der Zusammensetzung, eines oder mehrerer Polyorganosiloxane (R₂SiO)ₙ mit n = 1000 bis 8000 besteht.

5. Herstellung einer Zusammensetzung gemäß einem der Ansprüche 1 bis 4, wobei die Komponente d) dem thermoplastischen Polyurethan während seiner Herstellung, oder mittels Kompoundierung dem fertigen thermoplastischen Polyurethan zugegeben wird.

6. Verwendung einer Zusammensetzung gemäß einem der Ansprüche 1 bis 4 zur Herstellung von Formteilen und Häuten.

7. Verwendung einer Zusammensetzung gemäß einem der Ansprüche 1 bis 4 im Spritzgieß-, Extrusions- und Powder-Slush-Verfahren.

8. Verwendung einer Zusammensetzung gemäß einem der Ansprüche 1 bis 4 für die Innenausstattung in Kraftfahrzeugen.

9. Verwendung einer Zusammensetzung gemäß einem der Ansprüche 1 bis 4 für Anbau ― und Karosseriebestandteile von Kraftfahrzeugen.
